# EUROPEAN PATENT SPECIFICATION

(11) **EP 1 876 409 B1**
(45) Date of publication and mention of the grant of the patent: **25.01.2012**
(21) Application number: 07110947.4
(22) Date of filing: 25.06.2007
(51) Int. Cl.: F41C 23/10, F41C 23/16, F41C 23/14, F41B 7/04, F41B 11/08

(54) **Fishing gun for scuba diver with an adjustable grip**
Harpunengewehr für Gerätetaucher mit verstellbarem Griff
Fusil lance-harpon pour plongeur sous-marin avec poignée réglable

(30) Priority: 05.07.2006 IT FI20060042 U
(43) Date of publication of application: 09.01.2008
(73) Proprietor: Cressi-Sub S.p.A., 16165 Genova (IT)
(72) Inventor: Pedemonte, Stefano, 16164, Genova (IT)
(74) Representative: Bardini, Marco Luigi

(56) References cited:
- EP-A1- 1 657 519
- FR-A1- 2 607 912
- US-A- 5 621 997

## Description

The present invention relates generally to the field of equipment for underwater activities and more specifically to spear guns for fishing and underwater hunting. More precisely, the invention relates to an adjustable grip for a fishing gun for scuba divers.

It is common knowledge that a scuba diving gun basically comprises a frame with a grip and an elongated body extending from the grip on which a spear is slidingly arranged. Elastic cables placed under tensile stress when the gun is loaded exert a propulsive action on the spear. The spear is released by pulling a trigger situated immediately in front of the grip.

For optimal use of a fishing gun for scuba divers, it is important for the grip to enable the scuba diver to hold it safely and steadily with only one hand. For this purpose, the shape and size of the grip are particularly important and should ideally be adaptable to the shape and size of the user's hand, also on account of the fact that the scuba diver is likely to be wearing gloves of a more or less considerable thickness.

In the majority of cases, fishing guns for scuba divers are fitted with a fixed grip that is sized on the basis of average hand measurements so as to satisfy a large number of users. Fishing guns for scuba divers have also been made with a replaceable grip so that users can have the gun fitted with the grip that best suits their needs when they buy it, or the gun may be sold complete with several interchangeable grips for use in different operating conditions, e.g. with and without gloves. Such solutions naturally result in a greater structural complexity and pose problems in that they make it necessary to stock the various sizes of grip.

FR 2607912 discloses a spear gun for scuba drivers with a volume-adjustable grip in which spaces are interposable between the grip sides whereby the grip thickness is modified to fit the grip to the driver's hand.

The object of the present invention is to provide a fishing gun for scuba divers with a grip that can be adjusted according to the user's needs.

Another object of the invention is to provide a fishing gun for scuba divers of the aforementioned type wherein the grip is adjustable in a particularly straightforward manner from the structural and functional viewpoint.

These objects are achieved by a fishing gun for scuba divers according to the present invention, the main characteristic of which are set forth in the attached claims.

The invention is illustrated in more detail below with the decription of an embodiment thereof given as a non-limiting example with reference to the attached drawings, wherein:
- figure 1 is a perspective view of the frame of a fishing gun for scuba divers fitted with a grip according to the invention;
- figure 2 is a side view of the frame of a fishing gun for scuba divers showing the two separate parts of the grip according to the invention;
- figure 3 is a perspective view of the frame of a fishing gun for scuba divers wherein the grip according to the invention is shown in an exploded view;
- figures 4, 5 and 6 show three different possible adjustment modes for the position of the movable part with respect to the fixed part of the grip according to the invention.

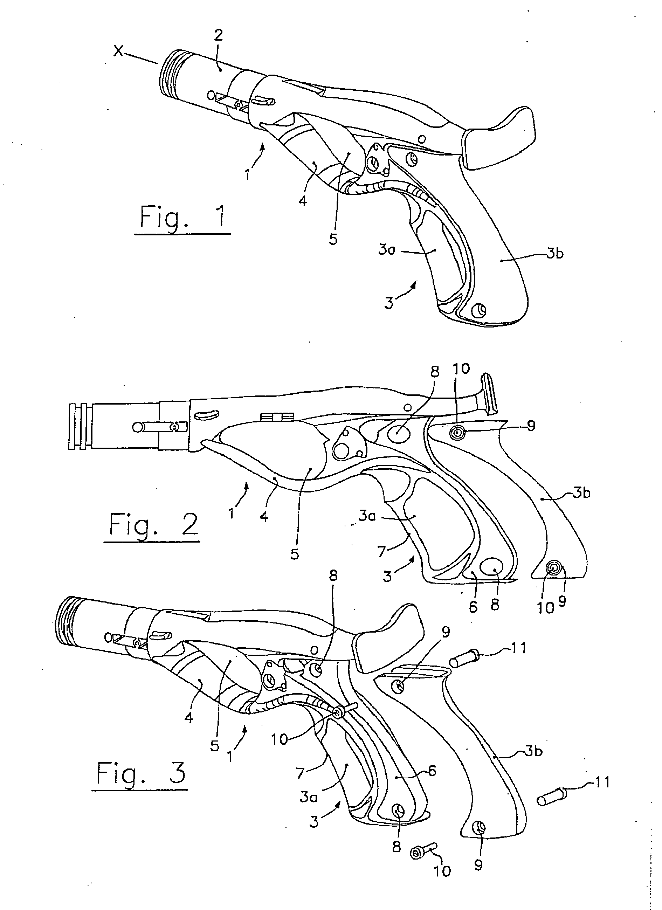

With reference to figures 1, 2 and 3, the numeral 1 generically indicates the frame of a fishing gun for scuba divers comprising an elongated body 2 extending substantially along the longitudinal axis X of the gun and designed to engage in a stem for supporting and guiding a spear (not shown), said elongated body terminating with a grip, generically indicated by the numeral 3, from which a closed trigger guard 4 extends on the elongated body 2 to create a space 5 for a trigger (not shown).

The grip 3 consists of a fixed part 3a integrally attached to and extending from the elongated body 2, and a movable part 3b connected to the rear of the fixed part. More precisely, the fixed part comprises a front 7, anatomically shaped to make it easy to grasp the grip with the fingers, and with a central rib 6 extending over its entire length on the opposite side. The movable part 3b has an outer profile shaped so that the user can comfortably rest the palm of his/her hand and a substantially U-shaped cross-section, shown in figure 3, suitable for engaging on the central rib 6.

At each end of the rib 6 there are respective longitudinal through slots 8, which may be elliptic in shape, as in the embodiment illustrated, while there are two corresponding through holes 9 on the movable part 3b that, when the rib 6 is engaged in the movable part 3b, these holes 9 are aligned with the slots 8. A pair of bolts 10 and nuts 11 for engaging in the holes 9 through the slots 8 are used to secure the movable part 3b to the fixed part 3a.

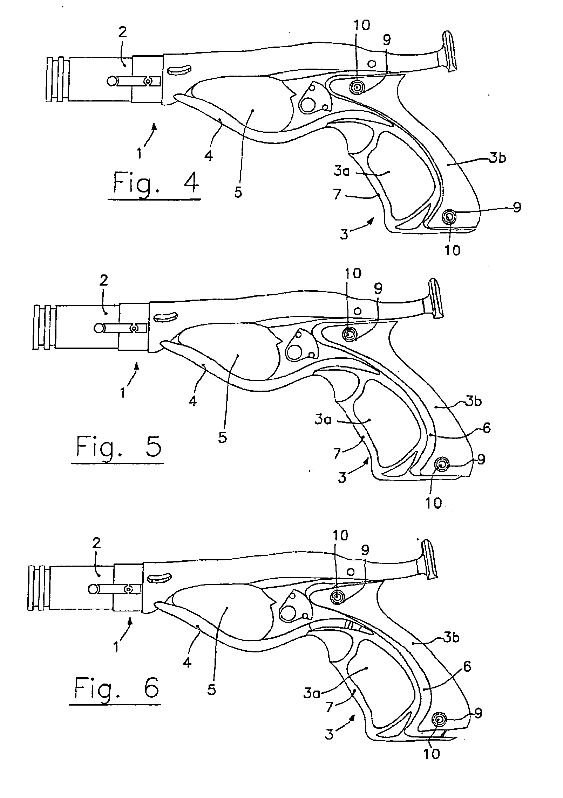

Loosening one or both of the bolts 10 enables the displacement of the movable part 3b with respect to the fixed part 3a to adjust the position of the former as required, then the one or both bolts 10 are tightened again to lock the movable part 3b of the grip in the chosen position. Figures 4, 5 and 6 show three different positions in which the movable part 3b can be placed with respect to the fixed part 3a.

Figure 4 shows a first case wherein the movable part 3b is shown abutting completely against the rib 6 of the fixed part 3a, thus achieving the configuration with the narrowest grip achievable. Figure 5, on the other hand, shows the configuration with the widest grip achievable, when the movable part 3b only partially engages on the rib 6 of the fixed part 3a. In the two configurations illustrated in figures 4 and 5, the variation in the width of the grip 3 is obtained by displacing the movable part 3b closer to or further from, but always parallel to the fixed part 3a, but a differentiated variation in the width of the grip can also be obtained by turning the movable part 3b around one or other of the two bolts 10. For example, by rotating the movable part 3b around the bolt nearest to the longitudinal axis of the gun, as shown in figure 6, the width of the grip is progressively reduced starting from its free end, at which it reaches its maximum width.

Although it is not shown in detail, it is clear that the situation opposite to the one shown in figure 6 can be obtained by turning the movable part 3b around the bolt 10 situated in the vicinity of the free end of the grip 3, thereby obtaining a widening of the grip in the vicinity of its root while maintaining the minimum width in the vicinity of its free end. It is also self-evident, and consequently not illustrated here in detail, that different grip configurations can be obtained by combining the rotation and lateral displacement of the movable part 3b in various ways.

It should be noted that the rotation of the movable part 3b with respect to the fixed part 3a is enabled by the slack existing between the two parts, and particularly by the fact that the movable part 3b is slightly shorter than the central rib 6 on the fixed part 3a on which the movable part 3b engages.

The thickness of the fixed part 3a and of the movable part 3b in line with their adjoining edges is designed to ensure a smooth and substantially continuous surface on the grip.

## Claims

1. A spear gun for scuba divers comprising a frame (1) with a body (2) that is elongated along the longitudinal axis of the gun and a grip (3) at one end of and extending from said elongated body, wherein said grip comprises a fixed part (3a) integrally attached to said elongated body and a movable part (3b) adjustably mounted on said fixed part, with means (8, 9, 10, 11) for locking the movable part (3b) on the fixed part (3a) after establishing the preferred configuration for said grip **characterized in that** said fixed part (3a) has a central rib (6) along the side facing in the opposite direction to the one in which said elongated body (2) extends, and said movable part (3b) has a substantially U-shaped cross-section for engaging on said rib and wherein two longitudinal slots (8) are formed on said rib (6) and two corresponding through holes (9) on said movable part (3b) suitable for engaging bolts (10) for locking the movable part (3b) on the fixed part (3a).

2. A spear gun for scuba divers according to any of the previous claims, wherein the movable part (3b) can be displaced equidistant from the fixed part (3a) or angularly displaceable around either of the locking bolts (10), a degree of slack being provided between the fixed part (3a) and the movable part (3b) in the direction of the length of the grip.

## Patentansprüche

1. Harpunengewehr für Gerätetaucher, enthaltend einen Rahmen (1) mit einem Körper (2), der entlang der Längsachse des Gewehrs länglich ist, und einem Griff (3) an einem Ende des und sich erstreckend von dem Körper(s), wobei der Griff ein festes Teil (3a), das integral an dem länglichen Körper angebracht ist, und ein bewegliches Teil (3b) enthält, das einstellbar an dem festen Teil montiert ist mit Einrichtungen (8, 9, 10 ,11), um das bewegliche Teil (3b) an dem festen Teil (3a) zu verriegeln, nachdem die bevorzugte Konfiguration für den Griff eingerichtet wurde, **dadurch gekennzeichnet, dass** das feste Teil (3a) eine zentrale Rippe (6) entlang der Seite hat, die in die entgegengesetzte Richtung zu derjenigen zeigt, in die sich der längliche Körper (2) erstreckt, und das bewegliche Teil (3b) einen im Wesentlichen U-förmigen Querschnitt zum Eingriff an der Rippe hat, wobei zwei längliche Schlitze (8) an der Rippe (6) und an dem beweglichen Teil (3b) zwei entsprechende Durchgangslöcher (9) ausgebildet sind, die für Eingriffsbolzen (10) passend sind, um das bewegliche Teil (3b) an dem festen Teil (3a) zu verriegeln.

2. Harpunengewehr für Gerätetaucher nach Anspruch 1, wobei das bewegliche Teil (3b) äquidistant von dem festen Teil (3a) versetzt oder winkelmäßig verstellbar um einen der Verriegelungsbolzen (10) sein kann, wobei ein Maß an Schlupf zwischen dem festen Teil (3a) und dem beweglichen Teil (3b) in der Richtung der Länge des Griffs vorgesehen ist.

## Revendications

1. Un fusil lance-harpon pour plongeurs sous-marins comprenant un cadre (1) avec un corps (2) allongé selon l'axe longitudinal du fusil et une poignée (3) située à une extrémité du dit corps allongé et s'étendant à partir de celui-ci, où ladite poignée comporte une partie fixe (3a) solidaire du dit corps allongé et une partie mobile (3b) montée de façon ajustable sur ladite partie fixe, avec des moyens (8, 9, 10, 11) pour bloquer la partie mobile (3b) sur la partie fixe (3a) après que la configuration préférée de ladite poignée ait été obtenue, **caractérisé en ce que** ladite partie fixe (3a) comporte une nervure centrale (6) le long du côté opposé à celui à partir duquel s'étend ledit corps allongé (2), et que ladite partie mobile (3b) présente une section transversale essentiellement en forme de U pour s'engager sur ladite nervure et où sont réalisées deux fentes longitudinales (8) sur ladite nervure (6) et deux orifices traversants correspondants (9) sur ladite partie mobile aptes à recevoir des boulons (10) de blocage de la partie mobile (3b) sur la partie fixe (3a).

2. Un fusil lance-harpon pour plongeurs sous-marins selon la revendication 1, où la partie mobile (3b) peut être déplacée de façon équidistante à partir de la partie fixe (3a) ou déplacée angulairement autour de l'un ou l'autre des boulons de blocage (10), un certain jeu étant prévu entre la partie fixe (3a) et la partie mobile (3b) dans la direction de la longueur de la poignée.
